Europäisches Patentamt

European Patent Office

Office européen des brevets

(11) Publication number: **0 277 025**
**A1**

## EUROPEAN PATENT APPLICATION

(21) Application number: **88300747.8**

(22) Date of filing: **28.01.88**

(51) Int. Cl.⁴: **H 04 N 5/72**
**H 01 J 29/89, G 02 B 3/00**

(30) Priority: **29.01.87 US 8514**

(43) Date of publication of application:
**03.08.88 Bulletin 88/31**

(84) Designated Contracting States:
**AT BE CH DE ES FR GB GR IT LI LU NL SE**

(71) Applicant: **VISUAL EASE, INC.**
**855 Scott Boulevard**
**Santa Clara, CA 95050 (US)**

(72) Inventor: **Blum, Jerome Victor**
**24900 La Loma Court**
**Los Altos Hills CA 94022 (US)**

(74) Representative: **Paget, Hugh Charles Edward et al**
**MEWBURN ELLIS & CO. 2/3 Cursitor Street**
**London EC4A 1BQ (GB)**

(54) **Eye comfort device.**

(57) An eye comfort device for use with a video display screen comprises a transparent plate (20) having a front surface (34) with a curvature of from 0.4 to 0.8 diopters. The plate (20) contains a quantity of UV absorbent sufficient to block at least 90 percent of UV transmissions through the plate having a wavelength of from 300 to 400 nm and a quantity of a pink colorant sufficient to provide increased eye comfort, particularly during prolonged viewing of the screen (12).

FIG._1.

## Description

### EYE COMFORT DEVICE

This invention relates to an eye comfort device for viewing of cathode ray tube display screens.

With the rapid expansion of computer operations into all aspects of business and government, many hundreds of thousands of people are involved in the operation of computer video display terminals. Many operators are positioned at the terminals during most of their working day, focusing on characters on the screen at a fixed focal distance, and exposed to the light radiating from the fluorescing pigments in the CRT screen. Increasingly, video display terminal operations are being linked to job-related stress and visual impairments.

Medical concern about the contribution of video display terminal use to eye impairment and stress is increasing. Although medical investigators, including the 1983 National Research Council Report, have produced no definitive evidence that prolonged video display terminal exposure produces ocular pathology, operators do suffer from certain ocular symptoms. Individuals at the workstation, especially after a stint of several hours, may have headaches, ocular pain, blurring, diplopia, congestion and ephiphora -otherwise known as the "VDT Syndrome".

Although numerous legal judgments have been obtained on the basis of eye damage from VDT use, medical opinions about the long term damage potential of VDT use are divided. In the report "Video Displays, Work, and Vision" by the Panel on Impact of Video Viewing on Vision of Workers, Committee on Vision, Comission on Behavioral and Social Sciences and Education, National Research Coucil published by the National Academy Press, Washington D.C. (1983) finding that radiation damage or serious diseases such as cataracts are not caused by VDT use, Dr. Stark, Professor of Physiological Optics and Engineering Science of the University of California, Berkeley (Appendix C) noted that ocular discomfort and visual fatigue beyond that appropriate for a normal workplace is indisputably related to VDT use. Although the ultraviolet (UV) radiation level emitted from CRT screens is generally believed to be below the level causing UV radiation damage to the ocular system, further research to identify the consequences of the UV radiation was recommended by Lerman, S. et al, "Ultraviolet Radiation Protection." CLAO. 11(1):39-45 (1985).

Most improvements of the video display terminals (VDT) and other cathode ray tube application have focused on increasing image clarity or definition, contrast over background and ambient light reflections from the screen surfaces. For example, reduction of reflected light by fusing silica sols to the glass screen surface is described in U.S. Patent 3,940,511. Woven mesh elements which reduce incident light reflection are described in U.S. Patents 2,977,412 and 4,253,737.

A variety of filters have been devised to modify the light transmissions from the screens. The construction of television and colour CRT screens using pigments which improve color are described in U.S. Patent 4,217,520. Use of pigments to absorb or modulate ambient light interference is described in U.S. Patents 3,511,560, 3,582,189, 3,760,215 and 4,392,077.

Pink tint have been used in lenses and goggles to reduce UV transmissions.

The present inventor has found that the complaints, other than those derived from uncorrected refractive errors and eye muscle problems, can be traced to glare, light reflection, accommodative spasm and mental stress. The cornea, iris, lens and retina are sensitive to ultraviolet light (UV). The cornea is particularly susceptible to UV damage. Corneal epithelium may slough off and result in keratitic inflammation. With more severe exposure, iritis can occur. The human crystalline lens may have an increase in chromophole cells, leading to discoloration, and in the extreme, cataract formation. UV light can cause retinal irritation and/or damage, such as macula cyst or holes. Accommodative spasm is an overactivity of accommodation wherein the refractive power of the eye is increased and the patient experiences temporary myopia. The observer becomes temporarily near-sighted as the result of ciliary muscle spasm. It may be a response to fatigue. These symptons can be induced and/or exaggerated by mental stress.

The present invention addresses the problem of providing a different type of eye comfort device, effective to protect a VDT viewer from ocular discomfort.

Accordingly, it provides an eye comfort device that comprises a plate which may be adapted to be positioned between the viewer and the CRT or laminated to or into the screen of the latter - having a curvature providing a lens power of between 0.4 and 0.8 dioptres. This provides optical adjustment of the focal length for screen viewing by the viewer and can thereby increase eye comfort of the user by reducing eye strain and irritation, particularly during prolonged viewing.

The plate preferably also has dispersed therein a quantity of UV absorbant, and/or a rose, magenta or pink tint or colorant, sufficient to block a substantial proportion -preferably at least 80% - of UV light. The filtering of these objectionable frequencies is preferred to be at least 80%, or better 90%, in the range 300-400 nm by the UV absorbant, and at leat 80% in the range 300-360 nm by the the tint or colorant.

The preferred plate composition is substantially transparent organic polymer containing, in addition to magenta tint, a quantity of UV absorbent sufficient to block at least 90 percent of UV transmissions below 400nm.

By way of example, embodiments of the invention are now described in detail with reference to the accompanying drawings in which:

Fig. 1 is a perspective view of the keyboard display terminal showing an eye comfort device;

Fig. 2 is a cross-sectional view of the eye comfort device shown in Fig. 1.

In the common use of computer terminals, a keyboard operator keys in data, and the characters input, as well as character or other output is displayed on the screen. The surface of the CRT tube is normally glass or other reflective material. Reading characters displayed on a screen with a high level of ambient reflection causes eye fatigue. Various filters and screens have been tried to reduce the ambient glare to a more comfortable level. However, eye fatigue has persisted. I have determined that this fatigue is due to a combination of eye irritations from certain frequencies of light transmitted by the CRT screen and to fatigue of the medical rectus internal eye muscle caused by prolonged focus on the screen surface displaying the characters.

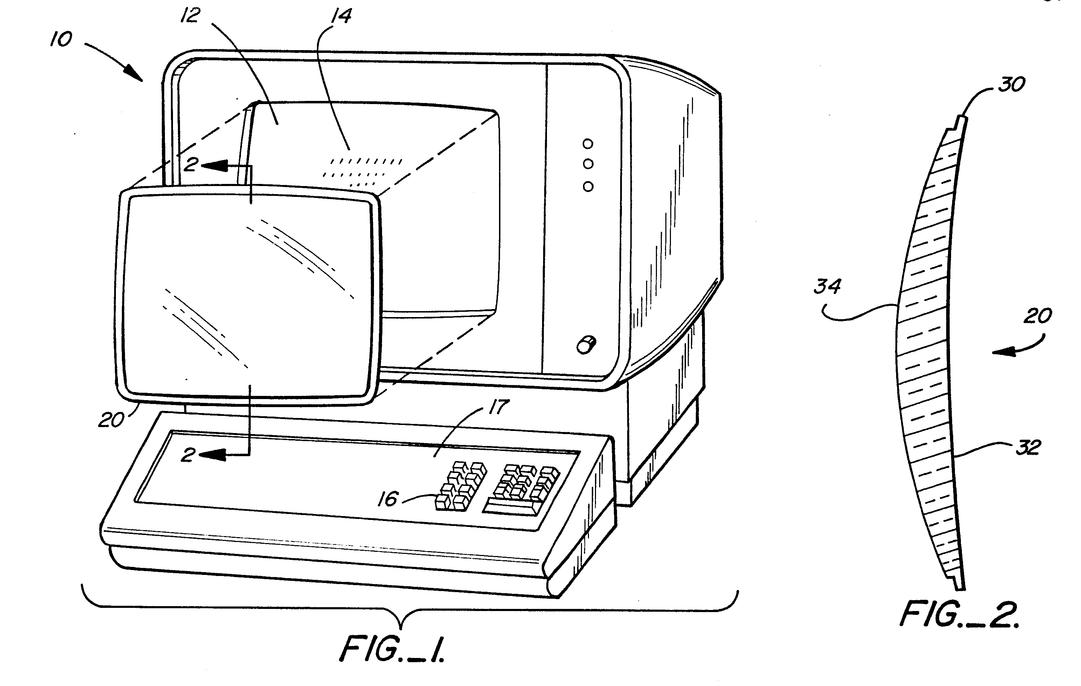

Fig. 1 is a perspective view of a customary display terminal showing my eye comfort panel or detachable screen plate embodying my invention. The computer terminal 10 has a cathode ray tube 12 on which characters, lines and shapes 14 are displayed in illuminated numbers, symbols, letters and shapes representing input data and/or feedback. The data is input with standard keys 16 of a keyboard 17. The operator is positioned in front of the display screen 12, positioned at an unvarying distance from the screen surface.

The eye comfort device shown is a detachable screen 20 dimensioned to fit over the face of the CRT screen 12, supported by a flat surface or rentention groove 22 in the screen housing 24. Alternatively, the screen 20 can be a faceplate or other panel permanently adhered to the outermost surface of the CRT tube, a safety panel thereon or an intermediate layer in a CRT faceplate laminate. All of these possibilities are intended to be included in the term "plate" as used herein.

Fig. 2 is a cross-sectional view of the eye comfort device shown in Fig. 1. The eye comfort screen or plate 20 has an outer edge 30 and a back face 32 which is preferably shaped to conform to the curvature of the front surface of the viewing surface 12 of the device. The front surface 34 of the plate 20 is a convex lens surface having a power of from 0.4 to 0.8 diopters and preferably from 0.5 to 0.6 diopters.

The screen or plate 20 can be any transparent material, preferably with light transmissions of at least 90 percent. The materials can be glass or transparent organic polymers. Suitable glasses include routine soda-lime silicate glasses, photochromic glasses such as borosilicate glasses and the like. Suitable transparent organic polymers include acrylic polymers and copolymers (e.g., LUCITE, Du Pont; PLEXIGLAS, Rohm & Haas), acrylonitrile-methyl acrylate copolymers (e.g., BAREX 210, Vistron), polycarbonates (e.g., LEXAN, General Electric; MERION, Mobay Chemical; and TUFFAK, Rohm & Haas), and allyl diglycol carbonates (CR-39). Other transparent thermosetting and thermoplastic polymers can also be used.

The plastic screen contains a UV absorbing material and a pigment or dye which has a pink, rose or magenta coloration. The amount of UV absorbent in the plastic is sufficient to block at least 80 percent and preferably 90 percent of UV radiation within the frequencies of 300 to 400 nm. The amount of absorbent required will depend upon the choice of pigment or dye and its absorbency properties. Any UV absorbing material soluble or dispersible in the plastic precursors which does not significantly impair the transparency of the plastic can be used. Examples of suitable UV absorbing materials which can be used are CYAPORT (American Cyanamid), and UNIVEL D36, D38 AND D40 (Dow Chemical).

The magenta or pink pigment or dye can be any absorbent which preferentially transmits light having the frequencies corresponding to a pink or magenta color, preferably from 380 to 520 nm and optimally from 390 to 470 nm, but without significantly reducing the transparency of the plastic or the definition of the characters on the screen. The preferred pink or magenta pigments or tints block at least 80 percent of UV transmissions within the range of from 300 to 360 nm. The amount of pigment or dye incorporated in the screen 20 should be sufficient to provide increased eye comfort. Any amount has a beneficial effect. The preferred amounts should be sufficient to reduce light transmission outside the pink or magenta frequencies at least 20 percent and preferably at least 40 percent. Optimally the amount should reduce light transmission (outside the pink or magenta frequencies) at least 55 percent. Examples of magenta or pink pigments or dyes which are suitable absorbing materials for use are Pink #4 (ECONO TINT), and Rose #1 (Tint 1, Tint 2, Tint 3, Tint 4 and Grn 1).

A most preferred eye comfort screen is made of polymethylacrylate or polycarbonate having a surface lens curvature of 0.4 to 0.8 diopters and containing from 0.05 to 1.0 weight percent of UV absorbent and from 0.1 to 0.5 weight percent of a magenta pigment or dye.

## Claims

1. A device for protecting a viewer of a video display screen (12) from eye discomfort, characterised in that it comprises a transparent plate (20) incorporated in or adapted for mounting near or against the screen (12), the plate (20) being a lens with a power in the range 0.4-0.8 dioptres.

2. A device according to claim 1 wherein the plate (20) is a lens with a power in the range of 0.5-0.6 dioptres.

3. A device according to claim 1 or claim 2 wherein the plate (20) incorporates a quantity of UV absorbent substance sufficient to block transmission therethrough of at least 80% of UV radiation in the wavelength range 300-400 nm.

4. A device according to claim 3 wherein the UV absorbent is sufficient to block transmission of at least 90% of UV radiation in the wavelength range 300-400 nm.

5. A device according to any one of the preceding claims wherein the plate (20) incorporates a quantity of pink, rose or magenta colorant sufficient to provide some protection against eye discomfort.

6. A device according to claim 5 wherein there is sufficient of the colorant to block transmission through the plate (20) of at least 80% of light in the wavelength range 300-360 nm.

7. A device according to any one of the preceding claims wherein the plate (20) is made from a transparent organic polymer.

8. A device according to claim 7 wherein the plate (20) is made from an acrylate or methacrylate homopolymer or copolymer, or from a polycarbonate material.

9. A device according to claim 8 wherein the plate (20) contains from 0.05 to 1.0 wt% of UV absorbent substance and from 0.1 to 0.5 wt% of magenta pigment or dye.

10. A device according to any one of the preceding claims wherein the plate (20) has overall light transmission of at least 90%.

FIG._1.

FIG._2.

0277025

| | DOCUMENTS CONSIDERED TO BE RELEVANT | | EP 88300747.8 |
|---|---|---|---|
| Category | Citation of document with indication, where appropriate, of relevant passages | Relevant to claim | CLASSIFICATION OF THE APPLICATION (Int. Cl.4) |
| A | US - A - 4 577 928 (BROWN)<br>* Fig. 1-3; column 1, lines 24-33; claims * | 1 | H 04 N 5/72<br>H 01 J 29/89<br>G 02 B 3/00 |
| A | FR - A - 1 303 905 (TRASERRA BAULENAS)<br>* Fig. 1-2; page 1, left column, lines 9-14; page 1, left column, line 35 - page 1, right column, line 3 * | 1 | |
| A | US - A - 4 529 268 (BROWN)<br>* Fig. 1; abstract; column 1, lines 20-30 * | 1 | |
| A | DE - A1 - 3 513 683 (BRANDENSTEIN)<br>* Page 4, line 1 - page 5, line 21; page 7, lines 1-13 * | 1 | TECHNICAL FIELDS SEARCHED (Int. Cl.4)<br><br>H 04 N 5/00 |
| A | US - A - 3 418 426 (SCHLEGEL)<br>* Fig. 1-3; column 2, line 39 - column 3, line 75 * | 1 | H 01 J 29/00<br>H 01 J 5/00<br>G 02 B 3/00<br>G 02 B 5/00 |
| A | EP - A1 - 0 125 356 (LIN) | | G 02 B 25/00<br>G 02 B 27/00 |
| A | US - A - 4 628 365 (CARLTON) | | A 61 F 9/00<br>B 29 D 11/00 |

The present search report has been drawn up for all claims

| Place of search | Date of completion of the search | Examiner |
|---|---|---|
| VIENNA | 18-04-1988 | BRUNNER |